# EUROPEAN PATENT APPLICATION

(11) **EP 3 936 811 A1**
(43) Date of publication of application: **12.01.2022**
(21) Application number: 21182698.7
(22) Date of filing: 30.06.2021
(51) Int. Cl.: F28F 27/00

(54) **MONITORING APPARATUS, NON-TRANSITORY COMPUTER READABLE MEDIUM, AND MONITORING METHOD**

(30) Priority: 07.07.2020 JP 2020117359
(71) Applicant: YOKOGAWA ELECTRIC CORPORATION, Musashino-shi Tokyo 180-8750 (JP)
(72) Inventor: SUZUKI, Takeshi, Musashino-shi, Tokyo, 180-8750 (JP); NAKAUCHI, Makoto, Musashino-shi, Tokyo, 180-8750 (JP); KAWAZOE, Seiki, Fukuoka, 810-0004 (JP)
(74) Representative: Winter, Brandl - Partnerschaft mbB

(57) **Abstract**

A monitoring apparatus (10) includes an interface (30) and a controller (20). The interface (30) is configured to acquire a signal that is based on the temperature of the inside of a cooling tower (100) configured to cool a cooling target. The controller (20) is configured to acquire the signal from the interface (30) and calculate the temperature distribution of the inside of the cooling tower (100). The controller (20) analyzes an abnormal site of the cooling tower (100) based on the temperature distribution.

## Description

### TECHNICAL FIELD

The present disclosure relates to a monitoring apparatus, a non-transitory computer readable medium, and a monitoring method.

### BACKGROUND

Monitors for monitoring cooling tower performance are known. For example, see patent literature (PTL) 1.

### CITATION LIST

### Patent Literature

PTL 1: JP H3-64383 A

### SUMMARY

To reduce the load of maintenance operations for restoring performance when the performance of a cooling tower degrades, it is desirable to identify the abnormal site to be targeted for maintenance.

It would be helpful to provide a monitoring apparatus, a non-transitory computer readable medium, and a monitoring method capable of easily identifying an abnormal site in a cooling tower.

A monitoring apparatus according to an embodiment includes an interface and a controller. The interface is configured to acquire a signal that is based on a temperature of the inside of a cooling tower configured to cool a cooling target. The controller is configured to acquire the signal from the interface and calculate the temperature distribution of the inside of the cooling tower. The controller is configured to analyze an abnormal site of the cooling tower based on the temperature distribution. With this configuration, the water filling balance in the cooling tower can easily be visualized. Consequently, an abnormal site in the cooling tower can easily be identified. This configuration also allows early recognition of degraded performance of the cooling tower. Equipment thereby becomes easier to maintain. The equipment is better preserved and/or more efficient as a result of the equipment being maintained.

In a monitoring apparatus according to an embodiment, the cooling tower may include a plurality of fillers through which the cooling target passes. Based on the temperature distribution, the controller may be configured to analyze at least one filler in the plurality of fillers as being an abnormal site. This avoids inspection of the fillers and unnecessary replacement of the fillers. Consequently, the load of maintenance operations on the cooling tower is reduced. The equipment is also better preserved and/or more efficient as a result of the equipment being maintained.

In a monitoring apparatus according to an embodiment, the cooling tower may further include a plurality of shower nozzles configured to spray the cooling target towards the fillers. Based on the temperature distribution, the controller may be configured to analyze the fillers and/or the shower nozzles as being an abnormal site. This avoids inspection of the shower nozzles and unnecessary maintenance of the shower nozzles. Consequently, the load of maintenance operations on the cooling tower is reduced. The equipment is also better preserved and/or more efficient as a result of the equipment being maintained.

A monitoring apparatus according to an embodiment may further include a memory configured to store a history of the temperature distribution. Based on the history of the temperature distribution, the controller may be configured to estimate a replacement timing of the fillers and/or a maintenance timing of the shower nozzles. This configuration facilitates the establishment of a maintenance plan for the cooling tower. Equipment thereby becomes easier to maintain.

A non-transitory computer readable medium according to an embodiment stores a monitoring program to be executed by a computer. The monitoring program causes the computer to execute operations including acquiring a signal that is based on a temperature of the inside of a cooling tower configured to cool a cooling target, calculating a temperature distribution of the inside of the cooling tower based on the signal, and analyzing an abnormal site of the cooling tower based on the temperature distribution. With this configuration, the water filling balance in the cooling tower can easily be visualized. Consequently, an abnormal site in the cooling tower can easily be identified. This configuration also allows early recognition of degraded performance of the cooling tower. Equipment thereby becomes easier to maintain. The equipment is better preserved and/or more efficient as a result of the equipment being maintained.

A monitoring method according to an embodiment includes acquiring a signal that is based on a temperature of the inside of a cooling tower configured to cool a cooling target and calculating a temperature distribution of the inside of the cooling tower, and analyzing an abnormal site of the cooling tower based on the temperature distribution. With this configuration, the water filling balance in the cooling tower can easily be visualized. Consequently, an abnormal site in the cooling tower can easily be identified. This configuration also allows early recognition of degraded performance of the cooling tower. Equipment thereby becomes easier to maintain. The equipment is better preserved and/or more efficient as a result of the equipment being maintained.

According to the present disclosure, a monitoring apparatus, a non-transitory computer readable medium, and a monitoring method capable of easily identifying an abnormal site in a cooling tower are provided.

### BRIEF DESCRIPTION OF THE DRAWINGS

In the accompanying drawings:
FIG. 1 is a diagram illustrating an example configuration of a cooling tower subjected to monitoring;
FIG. 2 is a flowchart illustrating a monitoring method according to a comparative example;
FIG. 3 is a diagram illustrating an example configuration of a monitoring apparatus according to an embodiment;
FIG. 4 is a diagram illustrating an example form of installation of fibers in a cooling tower;
FIG. 5 is a plan view illustrating an example form of laying fiber in each stage;
FIG. 6 illustrates an example temperature distribution inside a cooling tower during normal operation;
FIG. 7 illustrates an example temperature distribution inside a cooling tower when two blocks are shielded;
FIG. 8 illustrates an example temperature distribution inside a cooling tower when four blocks are shielded;
FIG. 9 illustrates an example temperature distribution inside a cooling tower when one block is shielded;
FIG. 10 illustrates an example temperature distribution inside a cooling tower when one nozzle has stopped;
FIG. 11 illustrates an example of correction of a temperature distribution; and
FIG. 12 is a flowchart illustrating an example of the procedures of a monitoring method according to an embodiment.

### DETAILED DESCRIPTION

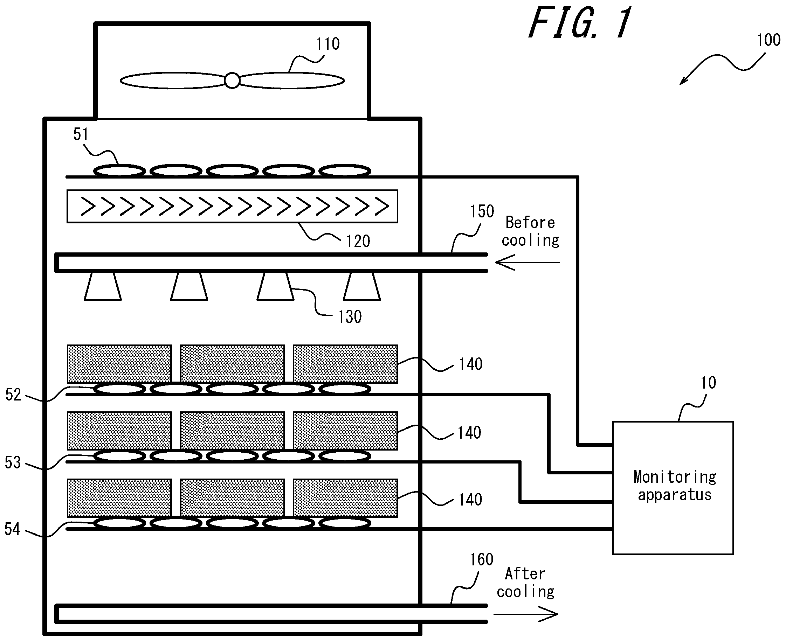

As illustrated by the example in FIG. 1, a monitoring apparatus 10 according to the present disclosure can monitor the state of a cooling tower 100. The cooling tower 100 treats water as a cooling target and cools the water. The cooling target is not limited to water and may be a different liquid.

The cooling tower 100 includes piping 150 for taking in the cooling target before cooling, shower nozzles 130 for spraying the cooling target taken in through the piping 150, and piping 160 for taking out the cooling target after cooling. The cooling tower 100 further includes fillers 140 for causing the cooling target to pass in the direction from the piping 150 side to the piping 160 side. The cooling tower 100 further includes a fan 110 for blowing air in the direction from the piping 160 side to the piping 150 side, i.e. in the opposite direction from the direction in which the cooling target passes. The cooling tower 100 further includes an eliminator 120 for blocking movement of the cooling target, so that the cooling target is not driven by air towards the fan 110.

In the cooling tower 100, the cooling target falls from top to bottom under the influence of gravity. The air that cools the cooling target, on the other hand, flows from bottom to top. Cooling of the cooling target by air can easily be facilitated in the cooling tower 100 by controlling the fall speed or fall flow rate of the cooling target with the filler 140.

The filler 140 is formed in a coarse corrugated shape or mesh shape to be capable of controlling the fall speed or fall flow rate of the cooling target. The filler 140 may become clogged due to foreign matter or the like. Clogging of the filler 140 affects the fall speed or fall flow rate of the cooling target. For example, the fall speed or fall flow rate of the cooling target at the location where the filler 140 is clogged becomes lower than the fall speed or fall flow rate of the cooling target at other locations. In other words, a distribution occurs in the fall speed or fall flow rate of the cooling target. Specifically, at the location where the filler 140 is clogged, the fall speed or fall flow rate of the cooling target may decrease. Conversely, at the location where no clogging occurs, the fall speed or fall flow rate of the cooling target may change or increase.

Furthermore, the spray amount of the cooling target from the shower nozzle 130 may decrease for reasons such as clogging of the shower nozzle 130 due to foreign matter or the like. The decrease in the spray amount of the cooling target from the shower nozzle 130 affects the fall speed or fall flow rate of the cooling target. For example, when the spray amount from a certain shower nozzle 130 decreases, the fall speed or fall flow rate of the cooling target around the position of that shower nozzle 130 may become lower than the fall speed or fall flow rate of the cooling target at other positions. In other words, a distribution occurs in the fall speed or fall flow rate of the cooling target.

When a distribution occurs in the fall speed or fall flow rate of the cooling target, the cooling efficiency of the cooling target by the cooling tower 100 overall decreases. In other words, the performance of the cooling tower 100 degrades. The performance of the cooling tower 100 also degrades as a result of unbalanced water filling in the cooling tower 100.

The cooling tower 100 is, for example, installed in a geothermal power plant. The performance of the cooling tower 100 greatly affects power generation output. Trouble with the water balance among a plurality of cooling towers 100, for example, affects the power generation output. Trouble with the water balance inside the cooling tower 100, for example, affects the power generation output. Deterioration of the fillers 140 or clogging of the shower nozzles 130 in the cooling tower 100, for example, affects the power generation output. The cooling tower 100 is not limited to a power plant and may be installed in various other facilities, such as a steel plant.

To maintain the performance of the cooling tower 100, the water filling balance in the cooling tower 100 needs to be monitored.

Embodiments of the monitoring apparatus 10 and a monitoring method for monitoring the cooling tower 100 are described below while being compared to a comparative example.

### (Comparative Example)

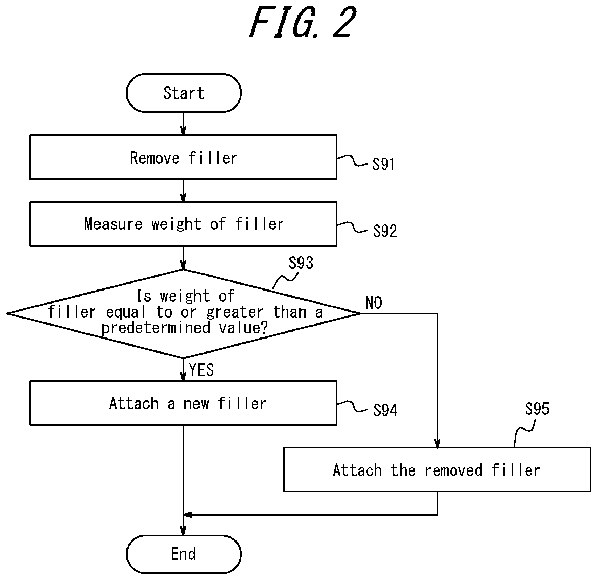

A monitoring method according to a comparative example is executed by a management entity of the cooling tower 100. The management entity of the cooling tower 100 executes the procedures of the flowchart in FIG. 2, for example, as the monitoring method.

The management entity removes the filler 140 (step S91).

The management entity measures the weight of the removed filler 140 (step S92).

The management entity judges whether the weight of the filler 140 is equal to or greater than a predetermined value (step S93). The weight of the filler 140 increases when the filler 140 is clogged by foreign matter or the like. The management entity can judge the degree of clogging of the filler 140 by the weight of the filler 140.

The management entity judges that the filler 140 is clogged to a predetermined degree or greater when the weight of the filler 140 is equal to or greater than a predetermined value (step S93: YES) and attaches a new filler 140 (step S94). In other words, the management entity replaces the filler 140.

The management entity judges that the filler 140 is not clogged to a predetermined degree or greater when the weight of the filler 140 is not equal to or greater than a predetermined value (step S93: NO) and reattaches the removed filler 140 (step S95). In other words, the management entity puts the filler 140 back without replacing it.

The management entity can maintain the functionality of the cooling tower 100 by performing the above procedures on each filler 140. However, the operations for removing the filler 140 and measuring the weight thereof become a burden.

The management entity may visually inspect the fillers 140 and replace abnormal fillers 140. However, variation occurs in the accuracy for discovering abnormalities.

The management entity may simply replace the fillers 140 in order, without inspecting the fillers 140. This approach, however, may lead to fillers 140 being replaced unnecessarily, or to delayed replacement of fillers 140 that do need to be replaced.

The management entity may also visually inspect the shower nozzles 130 and clean, replace, etc. an abnormal shower nozzle 130. It is difficult, however, to discover an abnormality in the shower nozzle 130 by visual inspection when the shower nozzle 130 is spraying the cooling target. It is burdensome to clean and replace all of the shower nozzles 130 regularly.

As described above, the monitoring method according to the comparative example has various problems.

To reduce the load of maintenance operations on the cooling tower 100, a monitoring apparatus 10 that can easily identify an abnormal site of the cooling tower 100 is described in the present disclosure.

### (Embodiment of the Present Disclosure)

The monitoring apparatus 10 according to an embodiment of the present disclosure can identify a location with degraded performance in the cooling tower 100 by monitoring the temperature distribution inside the cooling tower 100. Locations with degraded performance are easily identified with this configuration. Specifically, deterioration of the fillers 140 and clogging of the nozzles or the fillers 140 are easily identified. A location with degraded performance is also referred to as an abnormal site.

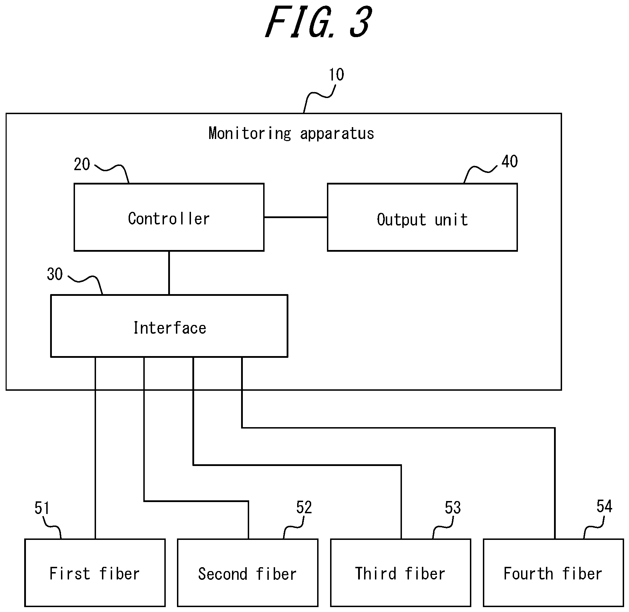

As illustrated in FIG. 3, the monitoring apparatus 10 according to an embodiment includes a controller 20, an interface 30, and an output unit 40.

The controller 20 may, for example, be configured by a processor such as a central processing unit (CPU). The controller 20 may implement predetermined functions by having the processor execute a predetermined program. The controller 20 may include a memory. The memory may store various information used for operations of the controller 20, programs for implementing the functions of the controller 20, and the like. The memory may function as a working memory of the controller 20. The memory may, for example, be a semiconductor memory. The memory may be included in the controller 20 or may be configured as a separate entity from the controller 20.

The interface 30 is configured to be connectable to a first fiber 51, a second fiber 52, a third fiber 53, and a fourth fiber 54. The first fiber 51, the second fiber 52, the third fiber 53, and the fourth fiber 54 are also collectively referred to as fibers. The number of fibers is not limited to four and may instead be three or less, or five or more. The interface 30 converts electric signals outputted by the controller 20 to optical signals and transmits the optical signals to the fibers. The interface 30 also converts optical signals received from the fibers to electric signals and outputs the electric signals to the controller 20.

The output unit 40 outputs information acquired from the controller 20. The output unit 40 may notify a user of information by outputting visual information, such as characters, graphics, or images, directly or via an external apparatus or the like. The output unit 40 may include a display device and may be connected to the display device in a wired or wireless manner. The display device may include various types of displays, such as a liquid crystal display. The output unit 40 may notify the user of information by outputting audio information, such as sound, directly or via an external apparatus or the like. The output unit 40 may include an audio output device, such as a speaker, and may be connected to the audio output device in a wired or wireless manner. The output unit 40 may notify the user of information not only with visual information or audio information but also by outputting, directly or via an external apparatus or the like, information that the user is capable of perceiving with a different sense.

The controller 20 transmits pulsed light to the fibers via the interface 30. The pulsed light that enters the fibers is scattered by Raman scattering at various positions in the fibers. The scattered light yielded by Raman scattering is also referred to as Raman scattered light. At least a portion of the Raman scattered light returns to the entrance side of the fiber. The controller 20 acquires a signal that is based on the Raman scattered light that returns to the entrance side of the fiber.

The Raman scattered light includes Stokes light that is shifted to longer wavelengths from the wavelength of the incident pulsed light and anti-Stokes light that is shifted to shorter wavelengths from the wavelength of the incident pulsed light. The intensity of each component of the Raman scattered light depends on the temperature of the fiber at the position where the Raman scattering occurred. The controller 20 can calculate the temperature of the fiber at the position where the optical signal was scattered by analyzing the Raman scattered light that is reflected and returns. Based on the time from when an optical signal is transmitted until the optical signal is reflected and returns, the controller 20 can also calculate the position where the received optical signal was reflected. Accordingly, the controller 20 can calculate the temperature of the fiber at each position of the fiber.

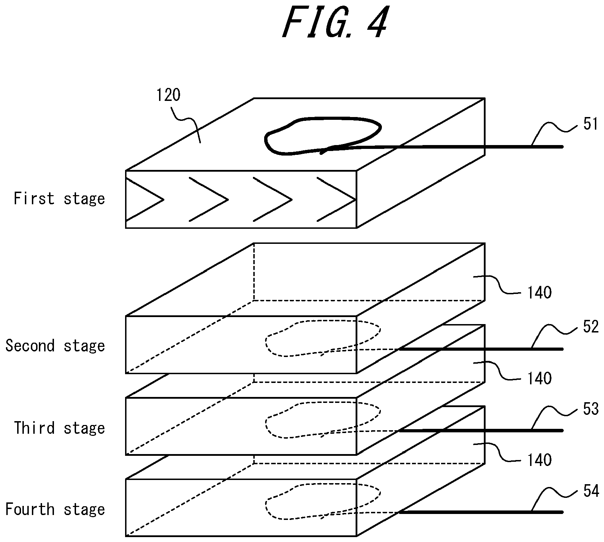

As illustrated by the example in FIG. 1 and FIG. 4, the first fiber 51, the second fiber 52, the third fiber 53, and the fourth fiber 54 are laid inside the cooling tower 100. The cooling tower 100 includes the eliminator 120 and three layers of the filler 140. In FIG. 4, the eliminator 120 is designated as the first stage. The three layers of the filler 140 are respectively designated as the second stage, the third stage, and the fourth stage. The first fiber 51 is laid above the eliminator 120, which is the first stage. The second fiber 52, the third fiber 53, and the fourth fiber 54 are respectively laid at the bottom of the filler 140 of the second stage, third stage, and fourth stage. The manner in which the fibers are laid in FIG. 1 and FIG. 4 is only an example. The fibers may be laid in various other ways.

By emitting pulsed light into the first fiber 51 and receiving Raman scattered light from the first fiber 51, the controller 20 can acquire the temperature at the top of the eliminator 120, which is the first stage. By emitting pulsed light into the second fiber 52 and receiving Raman scattered light from the second fiber 52, the controller 20 can acquire the temperature at the bottom of the filler 140 in the second stage. By emitting pulsed light into the third fiber 53 and receiving Raman scattered light from the third fiber 53, the controller 20 can acquire the temperature at the bottom of the filler 140 in the third stage. By emitting pulsed light into the fourth fiber 54 and receiving Raman scattered light from the fourth fiber 54, the controller 20 can acquire the temperature at the bottom of the filler 140 in the fourth stage.

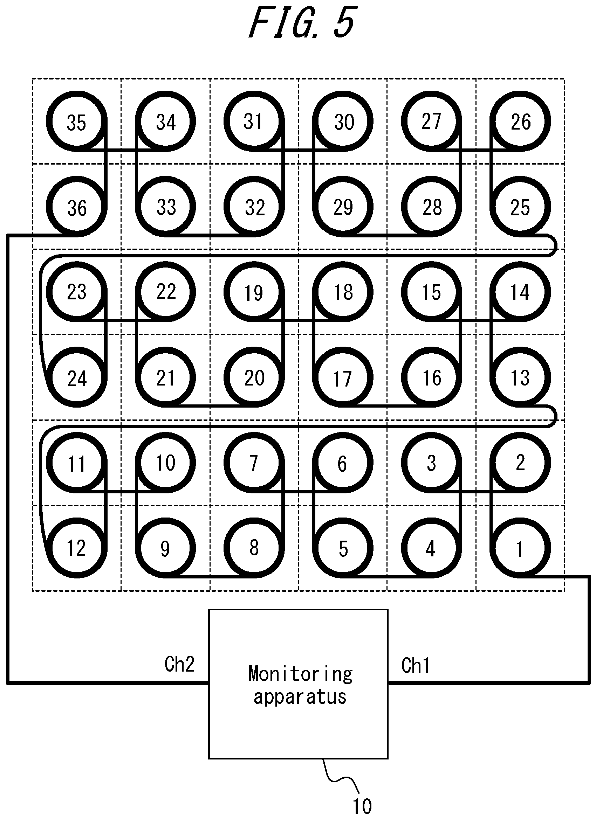

The fibers are laid in each stage of the cooling tower 100 as illustrated in FIG. 5, for example. Each stage of the cooling tower 100 is divided into 36 blocks in a 6 by 6 arrangement. A number is assigned to each block, from 1 to 36. The numbers are not referenced signs for identifying the configuration described in the present embodiment. The fiber is laid so as to traverse the blocks in order by number, and the fiber is wound at least once in each block to be laid in a ring shape in each block.

One end of the fiber is connected to the monitoring apparatus 10. The fiber that is drawn from the block labeled with number 1 is connected to a terminal of the monitoring apparatus 10 represented by Ch1. The other end of the fiber may or may not be connected to the monitoring apparatus 10. In the example in FIG. 5, the fiber that is drawn from the block labeled with number 36 is connected to a terminal of the monitoring apparatus 10 represented by Ch2. The monitoring apparatus 10 may be configured to emit pulsed light into the fiber from each of Ch1 and Ch2. The monitoring apparatus 10 may be configured to emit pulsed light into the fiber from only Ch1.

The monitoring apparatus 10 can identify the position where Raman scattering occurs in terms of the distance along the fiber from Ch1 or Ch2. The distance along the fiber from Ch1 or Ch2 is associated with the numbers of the blocks. Accordingly, the monitoring apparatus 10 can calculate the temperature of each block by analyzing the Raman scattered light. The monitoring apparatus 10 can acquire a temperature distribution in plan view of each stage of the cooling tower 100 by calculating the temperature of each block.

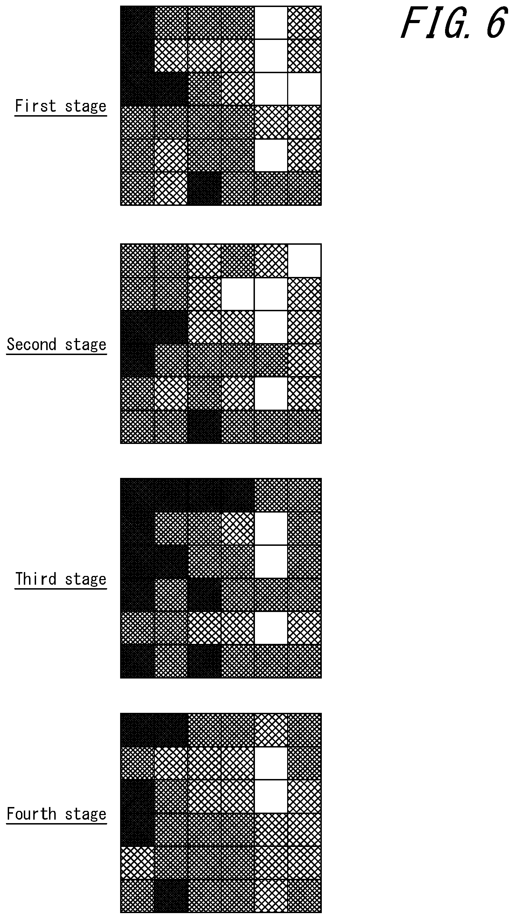

FIG. 6 illustrates an example temperature distribution of each stage of the cooling tower 100 during normal operation. The temperature of the white blocks is the lowest. The temperature of the blocks represented by cross-hatching is higher as the space between lines in the hatching is narrower. For example, in the temperature distribution of the first stage illustrated in FIG. 6, the temperature of the block first from the left and first from the top is the highest. The temperature of the block fifth from the left and first from the top is the lowest.

Here, a temperature distribution occurs or increases in at least a portion of the cooling tower 100 due to at least a portion of the fillers 140 being clogged or to an abnormal spray amount in at least a portion of the shower nozzles 130.

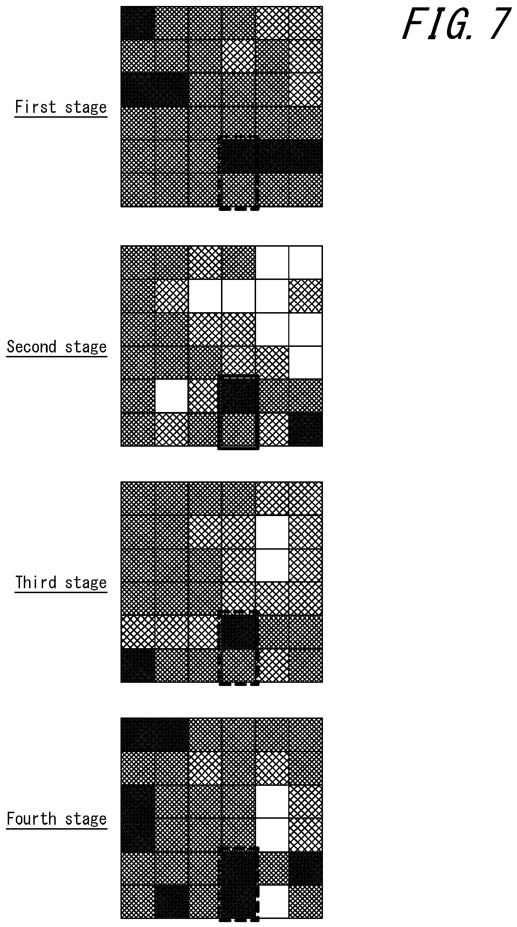

For example, suppose that clogging occurs at the two blocks positioned fourth from the left and fifth and sixth from the top in the filler 140 positioned in the second stage of the cooling tower 100. To acquire the temperature distribution under this assumption, the two blocks positioned fourth from the left and fifth and sixth from the top in the second stage were artificially shielded. In this case, the temperature distribution changed as illustrated in FIG. 7. The blocks surrounded by thick solid lines in the second stage in FIG. 7 correspond to the two blocks assumed to be clogged. The blocks surrounded by thick dashed lines in the first, third, and fourth stages correspond to blocks vertically aligned with the blocks assumed to be clogged in the second stage. Upon comparing the temperature distribution of FIG. 7 with the temperature distribution during normal operation represented in FIG. 6, it is clear that the temperature is higher in the blocks assumed to be clogged and the blocks vertically aligned with these blocks. In other words, the temperature difference from surrounding blocks increases for the blocks assumed to be clogged and the blocks vertically aligned with these blocks.

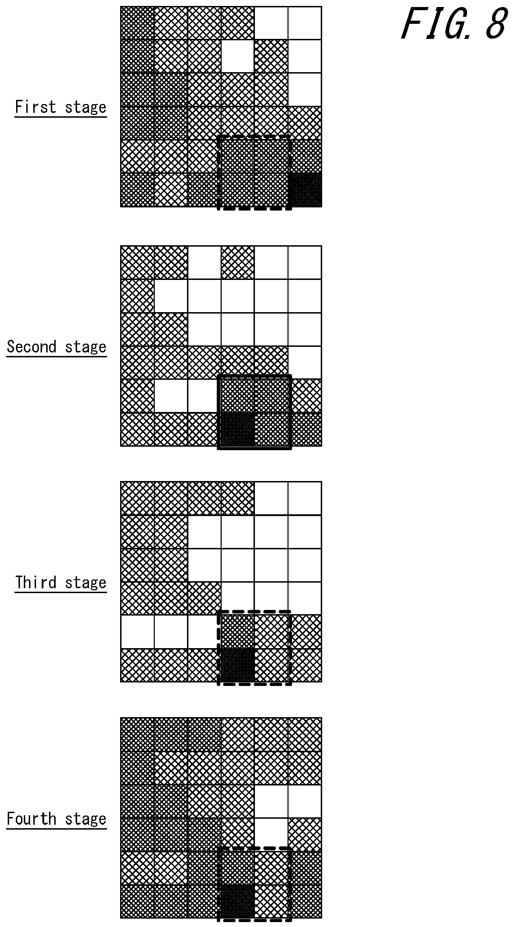

For example, suppose that clogging occurs at the four blocks positioned fourth and fifth from the left and fifth and sixth from the top in the filler 140 positioned in the second stage of the cooling tower 100. To acquire the temperature distribution under this assumption, the four blocks positioned fourth and fifth from the left and fifth and sixth from the top in the second stage were artificially shielded. In this case, the temperature distribution changed as illustrated in FIG. 8. The blocks surrounded by thick solid lines in the second stage in FIG. 8 correspond to the four blocks assumed to be clogged. The blocks surrounded by thick dashed lines in the first, third, and fourth stages correspond to blocks vertically aligned with the blocks assumed to be clogged in the second stage. Upon comparing the temperature distribution of FIG. 8 with the temperature distribution during normal operation represented in FIG. 6, it is clear that the temperature is higher in the blocks assumed to be clogged and the blocks vertically aligned with these blocks. In other words, the temperature difference from surrounding blocks increases for the blocks assumed to be clogged and the blocks vertically aligned with these blocks.

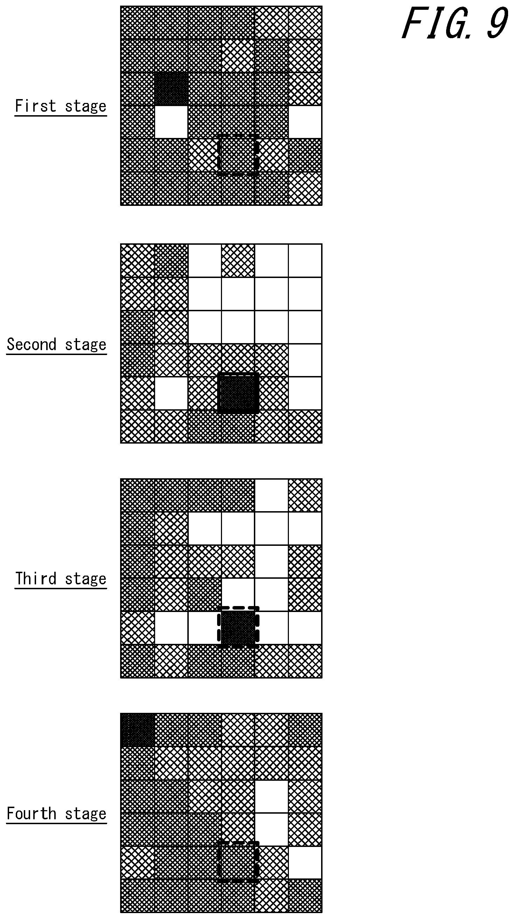

For example, suppose that clogging occurs at the block positioned fourth from the left and fifth from the top in the filler 140 positioned in the second stage of the cooling tower 100. To acquire the temperature distribution under this assumption, the block positioned fourth from the left and fifth from the top in the second stage was artificially shielded. In this case, the temperature distribution changed as illustrated in FIG. 9. The block surrounded by thick solid lines in the second stage in FIG. 9 corresponds to the block assumed to be clogged. The blocks surrounded by thick dashed lines in the first, third, and fourth stages correspond to blocks vertically aligned with the block assumed to be clogged in the second stage. Upon comparing the temperature distribution of FIG. 9 with the temperature distribution during normal operation represented in FIG. 6, it is clear that the temperature is higher in the block assumed to be clogged and the blocks vertically aligned with this blocks. In other words, the temperature difference from surrounding blocks increases for the block assumed to be clogged and the blocks vertically aligned with this block.

Based on the temperature distributions exemplified in FIG. 6 to FIG. 9, the controller 20 can compare the temperature distribution for normal operation with an acquired temperature distribution to estimate the position of the filler 140 at which clogging has occurred in plan view of each stage.

Based on the temperature distributions exemplified in FIG. 8 and FIG. 9, for example, the temperature of a block assumed to be clogged in the second stage is higher than the temperature of the vertically aligned blocks in the third and fourth stages. The controller 20 can estimate that clogging has occurred in the second stage based on such temperature distributions. In other words, the controller 20 can estimate the stage at which clogging has occurred.

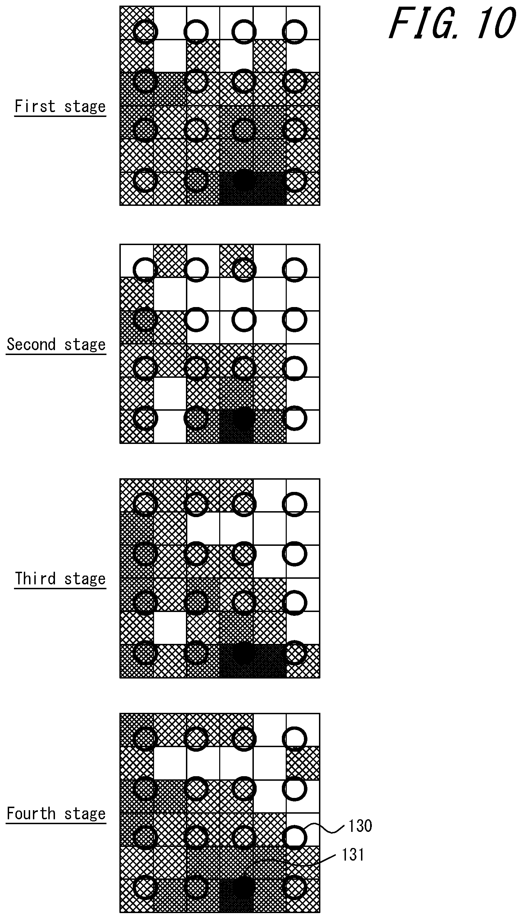

For example, it is assumed that the cooling tower 100 includes 16 shower nozzles 130 in a 4 by 4 array in plan view, as illustrated in FIG. 10. Here, it is assumed that the spray amount of the shower nozzle 130 positioned third from the left and fourth from the top has decreased. The nozzle 130 that has stopped is represented in FIG. 10 as a shower nozzle 131. To acquire the temperature distribution under this assumption, the shower nozzle 131 is artificially stopped.

In this case, the temperature distribution changed as illustrated in FIG. 10. In the temperature distribution from the first stage to the fourth stage, the temperature of the blocks positioned fourth from the left and sixth from the top is higher. The temperature of these blocks is higher than the temperature of surrounding blocks. The controller 20 can therefore estimate that the spray amount has decreased due to clogging or the like in the shower nozzle 131 arranged in correspondence with the block positioned fourth from the left and sixth from the top. By detecting the existence of a block with a higher temperature across stages, the controller 20 can estimate that the cause of the temperature distribution is not clogging of the filler 140 but rather an abnormality in the shower nozzle 130. In other words, the controller 20 can estimate whether the cause of the temperature distribution of the cooling tower 100 is the filler 140 or the shower nozzle 130.

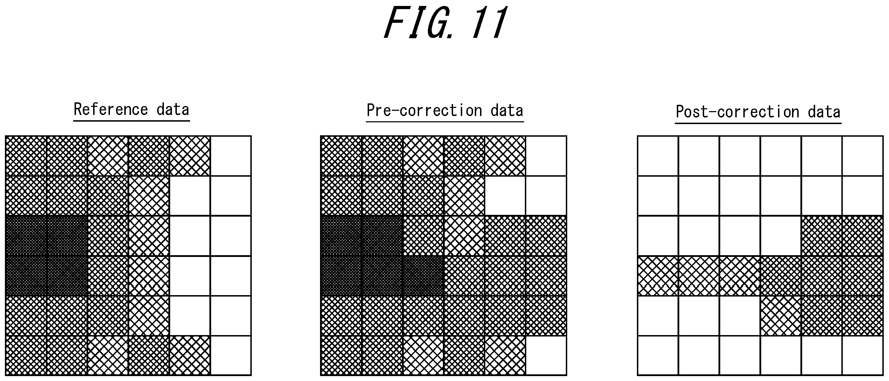

As described above, the controller 20 may estimate the cause of an acquired temperature distribution by comparing the temperature distribution for normal operation with the acquired temperature distribution. As exemplified in FIG. 11, the controller 20 may correct the acquired temperature distribution using the temperature distribution for normal operation as reference data and then estimate the cause based on the corrected temperature distribution. Specifically, the controller 20 treats the acquired temperature distribution as pre-correction data and corrects the pre-correction data based on the reference data to calculate post-correction data. The controller 20 may, for example, calculate the post-correction data by subtracting the reference data from the pre-correction data. The controller 20 may calculate the post-correction data by various other methods.

In the example in FIG. 11, the post-correction data indicates that the temperature of the blocks fifth and sixth from the left is higher than during normal operation. Based on the post-correction data, the controller 20 can estimate that an abnormality in a filler 140 or shower nozzle 130 at a position corresponding to the blocks fifth and sixth from the left is the cause of the temperature distribution.

The controller 20 may use the output unit 40 to notify the management entity of the cooling tower 100 of the result of estimating the cause of the temperature distribution. The controller 20 may cause the output unit 40 to output information encouraging replacement of the filler 140. The controller 20 may cause the output unit 40 to output information encouraging maintenance, such as cleaning of the shower nozzles 130.

By monitoring a change in the temperature distribution, the controller 20 may estimate the replacement timing of the filler 140 and/or the maintenance timing of the shower nozzles 130. The controller 20 may monitor the change in the temperature distribution by acquiring a history of the temperature distribution. The history of the temperature distribution may be stored in the memory. The controller 20 may cause the output unit 40 to output the estimated timing. The management entity of the cooling tower 100 can thereby more easily make a maintenance plan for the cooling tower 100. Furthermore, machine learning may be used to estimate the above-described replacement timing or maintenance timing. The correlation between the change in temperature distribution and the replacement timing or maintenance timing, for example, may be used in machine learning. The algorithm for machine learning may include any appropriate algorithm, such as a convolutional neural network (CNN), a recurrent neural network (RNN), or deep learning.

### (Example Flowchart of Monitoring Method)

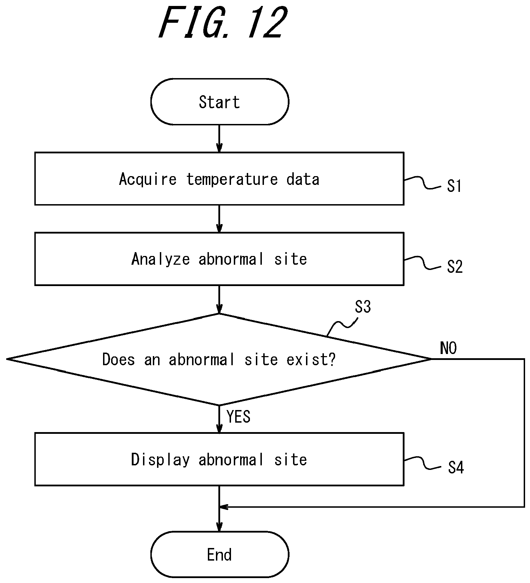

The controller 20 of the monitoring apparatus 10 may execute a monitoring method that includes the procedures of the example flowchart in FIG. 12. The monitoring method may be implemented as a monitoring program executed by the processor of the controller 20 or the like. The monitoring program may be stored on a non-transitory computer readable medium. The monitoring program may cause the computer executing the monitoring program to function as the monitoring apparatus 10.

The controller 20 acquires the temperature data (step S1). Specifically, the controller 20 transmits pulsed light to the fibers via the interface 30 and receives Raman scattered light returning from the fibers. Based on the received Raman scattered light, the controller 20 calculates the temperature at each position of each stage of the cooling tower 100, i.e. the temperature distribution within the cooling tower 100.

The controller 20 analyzes an abnormal site (step S2). Specifically, based on the temperature distribution inside the cooling tower 100, the controller 20 estimates whether at least a portion of the filler 140 is clogged and estimates the filler 140 in which an abnormality has occurred. The controller 20 may analyze a filler 140 as being an abnormal site when the filler 140 is estimated to be clogged. Based on the temperature distribution inside the cooling tower 100, the controller 20 may estimate whether the spray amount of at least a portion of the shower nozzles 130 has decreased and estimate which shower nozzle 130 has a decreased spray amount. The controller 20 may analyze a shower nozzle 130 with a decreased spray amount as being an abnormal site.

The controller 20 judges whether an abnormal site exists (step S3). The controller 20 ends execution of the procedures of the flowchart in FIG. 12 when no abnormal site exists (step S3: NO).

When an abnormal site exists (step S3: YES), the controller 20 displays the abnormal site (step S4). Specifically, the controller 20 causes the output unit 40 to display information related to the analyzed abnormal site. The controller 20 is not limited to displaying information and may cause the output unit 40 to output information in another way, such as by audio. After executing the procedure of step S4, the controller 20 ends execution of the procedures of the flowchart in FIG. 12.

As described above, according to the monitoring apparatus 10 and the monitoring method executed by the monitoring apparatus 10 of the present embodiment, the water filling balance in the cooling tower 100 can easily be visualized. With this configuration, an abnormal site in the cooling tower 100 is analyzed while the cooling tower 100 continues to operate. An abnormal site in the cooling tower 100 is also analyzed without the need for visual inspection of the cooling tower 100. Consequently, an abnormal site in the cooling tower 100 can easily be identified. Degraded performance of the cooling tower 100 can also be recognized early. Equipment thereby becomes easier to maintain. The equipment is better preserved and/or more efficient as a result of the equipment being maintained.

The monitoring apparatus 10 according to the present embodiment can acquire a temperature distribution by analyzing the Raman scattered light returning from the fibers. This can simplify the configuration for detecting the temperature inside a large-scale cooling tower 100.

According to the monitoring apparatus 10 and the monitoring method executed by the monitoring apparatus 10 of the present embodiment, an analysis is made of whether a filler 140 is an abnormal site. This avoids inspection of the fillers 140 and unnecessary replacement of the fillers 140. According to the monitoring apparatus 10 and the monitoring method executed by the monitoring apparatus 10 of the present embodiment, an analysis is also made of whether a shower nozzle 130 is an abnormal site. This avoids inspection of the shower nozzles 130 and unnecessary maintenance of the shower nozzles 130. Consequently, the load of maintenance operations on the cooling tower 100 is reduced.

In the above-described embodiment, the cooling tower 100 that is targeted for monitoring by the monitoring apparatus 10 and the monitoring method has a vertical configuration that cools the cooling target by counterflow. The cooling tower 100 that is targeted for monitoring may have a horizontal configuration that cools the cooling target by crossflow.

Although embodiments of the present disclosure have been described based on drawings and examples, it is to be noted that various changes and modifications may be made by those skilled in the art based on the present disclosure. Therefore, such changes and modifications are to be understood as included within the scope of the present disclosure. For example, the functions or the like included in the various components or steps may be reordered in any logically consistent way. Furthermore, components or steps may be combined into one or divided.

## Claims

1. A monitoring apparatus (10) comprising:
an interface (30) configured to acquire a signal that is based on a temperature of an inside of a cooling tower (100) configured to cool a cooling target; and
a controller (20) configured to acquire the signal from the interface (30) and calculate a temperature distribution of the inside of the cooling tower (100), wherein
the controller (20) is configured to analyze an abnormal site of the cooling tower (100) based on the temperature distribution.

2. The monitoring apparatus (10) of claim 1, wherein
the cooling tower (100) comprises a plurality of fillers (140) through which the cooling target passes, and
based on the temperature distribution, the controller (20) is configured to analyze at least one filler (140) in the plurality of fillers (140) as being an abnormal site.

3. The monitoring apparatus (10) of claim 2, wherein
the cooling tower (100) further comprises a plurality of shower nozzles (130) configured to spray the cooling target towards the fillers (140), and
based on the temperature distribution, the controller (20) is configured to analyze the fillers (140) and/or the shower nozzles (130) as being an abnormal site.

4. The monitoring apparatus (10) of claim 3, further comprising
a memory configured to store a history of the temperature distribution, wherein
based on the history of the temperature distribution, the controller (20) is configured to estimate a replacement timing of the fillers (140) and/or a maintenance timing of the shower nozzles (130).

5. A non-transitory computer readable medium storing a monitoring program configured to cause a computer to execute operations comprising:
acquiring a signal that is based on a temperature of an inside of a cooling tower (100) configured to cool a cooling target;
calculating a temperature distribution of the inside of the cooling tower (100) based on the signal; and
analyzing an abnormal site of the cooling tower (100) based on the temperature distribution.

6. The non-transitory computer readable medium of claim 5, wherein a plurality of fillers (140) through which the cooling target passes is included in the cooling tower (100), and the program is further configured to cause the computer to analyze, based on the temperature distribution, at least one filler (140) in the plurality of fillers (140) as being an abnormal site.

7. The non-transitory computer readable medium of claim 6, wherein a plurality of shower nozzles (130) configured to spray the cooling target towards the fillers (140) is included in the cooling tower (100), and the program is further configured to cause the computer to analyze, based on the temperature distribution, the fillers (140) and/or the shower nozzles (130) as being an abnormal site.

8. The non-transitory computer readable medium of claim 7, wherein the program is further configured to cause the computer to estimate, based on a history of the temperature distribution, a replacement timing of the fillers (140) and/or a maintenance timing of the shower nozzles (130).

9. A monitoring method comprising:
acquiring a signal that is based on a temperature of an inside of a cooling tower (100) configured to cool a cooling target and calculating a temperature distribution of the inside of the cooling tower (100); and
analyzing an abnormal site of the cooling tower (100) based on the temperature distribution.

10. The monitoring method of claim 9, wherein a plurality of fillers (140) through which the cooling target passes is included in the cooling tower (100), and the monitoring method further comprises analyzing, based on the temperature distribution, at least one filler (140) in the plurality of fillers (140) as being an abnormal site.

11. The monitoring method of claim 10, wherein a plurality of shower nozzles (130) configured to spray the cooling target towards the fillers (140) is included in the cooling tower (100), and the monitoring method further comprises analyzing, based on the temperature distribution, the fillers (140) and/or the shower nozzles (130) as being an abnormal site.

12. The monitoring method of claim 11, further comprising estimating, based on a history of the temperature distribution, a replacement timing of the fillers (140) and/or a maintenance timing of the shower nozzles (130).
